# EUROPEAN PATENT SPECIFICATION

(11) **EP 4 401 610 B1**
(45) Date of publication and mention of the grant of the patent: **11.02.2026**
(21) Application number: 22769719.0
(22) Date of filing: 30.08.2022
(51) Int. Cl.: A47J 43/046, A47J 43/07

(54) **A KITCHEN APPLIANCE**
KÜCHENGERÄT
APPAREIL DE CUISINE

(30) Priority: 13.09.2021 WO PCT/CN2021/118079
(43) Date of publication of application: 24.07.2024
(73) Proprietor: Versuni Holding B.V., 5656 AE Eindhoven (NL)
(72) Inventor: BAI, Jilong, 5656 AE Eindhoven (NL); CHENG, Wing Kee, 5656 AE Eindhoven (NL)
(74) Representative: Vollering, Stefanus Franciscus Maria
(86) International application number: PCT/EP2022/074121
(87) International publication number: WO 2023/036655

(56) References cited:
- EP-A1- 3 644 813
- WO-A1-2021/045802
- CN-U- 203 693 400
- US-A1- 2002 141 286
- US-A1- 2014 247 686

## Description

### FIELD OF THE INVENTION

This invention relates to kitchen appliances, and in particular kitchen appliances with a rotary tool held by a tool holder, wherein the tool holder is attachable to a jar so that the jar and tool holder combination may be attached to a motorized base of the appliance.

### BACKGROUND OF THE INVENTION

One kitchen appliance of this type is a blender, with a separable base and jar set, the jar set comprising a jar and a tool holder. This type of configuration is for example common for smoothie makers as well as blenders in general.

The base drives a rotary tool which forms part of the tool holder.

It is known to provide a magnetic drive coupling between the base and the tool holder. For example the motor in the base may drive a ring of opposite polarity magnets, and the tool holder has a corresponding ring of opposite polarity magnets which rotate by magnetic coupling between the two rings. One advantage of a magnetic coupling is that the contact surfaces between the two parts can be substantially flat (with no rotary mechanical interlocking features) and this allows an aesthetically pleasing and easy-to-clean designs. It also simplifies the mounting of the jar set to the base; it may simply be slid into place.

For kitchen appliances with a jar set that can be separated into a jar and a tool holder, there is a possibility that tool (blade) of the tool holder can rotate if the tool holder is placed on the top surface of the base without a jar.

For avoiding this risk that the blade can rotate when a jar is not safely covering the tool holder (and hence covering the blade), it is known to implement jar detection. This can be used to ensure that the blade is stopped whenever the tool holder is placed on the surface of the base without a jar.

One common method is to provide a mechanical micro switch between the jar set and the tool holder. However, it is not easy to implement a micro switch for a magnetic coupling design because there is no coupling feature serving as a suitable mounting for a micro switch or for passing electrical signals from the jar set to the base. It is also desirable to maintain the flat top surface of the base with no visual fixing mechanism or visual detection components. EP 3 644 813 A1 discloses a kitchen appliance comprising a jar detection system.

### SUMMARY OF THE INVENTION

The invention is defined by the claims.

According to examples in accordance with an aspect of the invention, there is provided a kitchen appliance comprising:
a base housing a motor, the base having a flat upper surface and a first portion of a magnetic drive coupling beneath the flat upper surface;
a tool holder, wherein a bottom side of the tool holder is for mounting on the base, wherein the tool holder comprises:
   a rotary tool;
   a second portion of a magnetic drive coupling for magnetically coupling with the first portion of the magnetic drive coupling such that the rotary tool is driven by the motor of the base via the magnetic drive coupling;
a jar for mounting over the tool holder;
a sensor for sensing whether or not the jar is mounted over the tool holder; and
a controller for enabling or disabling rotation of the rotary tool in dependence on the sensing by the sensor,
wherein the sensor comprises a component which is displaced by the mounting of the jar to the tool holder and a proximity sensor arrangement in the base for detecting a proximity of the component.

This kitchen appliance has a proximity sensor for sensing when a jar is coupled to the tool holder. The rotary tool can be stopped as soon as it is detected that the jar is disconnected from the tool holder.

The rotation can be stopped even if contact is still made between the tool holder and the base. Thus, if a tool holder is attached to the base with no jar, the motor can be stopped based on the sensing. This prevents a dangerous situation of a rotating tool being exposed to a user, because the jar always needs to be present, providing a protective cover over the tool.

The design can be used to prevent motor driving if, when powering on of the appliance, the tool holder is sitting on the surface of the base without the jar. Similarly, if the jar is screwed out from the tool holder while the blade is still rotating, it will be stopped.

The jar is for example a screw fit to the tool holder and the tool holder fits to the base with no mechanical interlocking. The tool holder functions as the lid of the jar, and the jar and tool holder are inverted to mount to the base. By "no mechanical interlocking" is meant that the tool holder position is retained on the base by the magnetic forces of the magnetic drive coupling rather than by a bayonet, screw or other mechanical locking arrangement.

The component is for example mounted in the tool holder and is moved by a bottom lip of the jar when the jar is attached to the tool holder. This bottom lip is the lowest part of the jar when mounted over the base (but the highest part of the jar when being filled).

The tool holder for example has a slider which is moved by the bottom lip of the jar when the jar is attached to the tool holder. Thus, an internal part of the tool holder slides up and down depending on the attachment position of the jar to the tool holder.

The proximity sensor arrangement for example comprises a set of proximity sensors. Using multiple sensors provides robustness to noise.

The component comprises an annular ring. It for example surround the first portion of the magnetic drive coupling, so providing a compact design.

The component is for example biased away from the proximity sensor by a spring arrangement, wherein mounting of the jar to the tool holder is against the bias of the spring arrangement.

Thus, the spring arrangement moves the component away from a sensing position whenever the jar is not connected to the tool holder. The spring arrangement for example comprises a set of springs.

In one set of examples, the component comprises a metallic component and the proximity sensor arrangement comprises an inductive proximity sensor. Thus, inductive sensing is used for proximity sensing.

The inductive proximity sensor arrangement for example comprises a drive coil for generating an electromagnetic field, an oscillator circuit which includes the drive coil, and a frequency sensing circuit for detecting a change in a resonance frequency of the oscillator circuit.

This is one way to implement inductive proximity sensing.

In another example, the component comprises a reflector and the proximity sensor arrangement comprises a light source for directing light to the reflector and a light detector for detecting reflected light.

Thus, optical sensing may be used for the proximity sensing. The light source for example comprises an infrared light source.

The kitchen appliance for example comprises a blender, and the rotary tool comprises a blade.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a kitchen appliance of the type to which the invention may be applied;
Figure 2 shows an example of the design of the tool holder to provide the sensor function;
Figure 3 shows an example of the design of the base to provide the sensor function;
Figure 4 shows a first internal cross sectional view of the base;
Figure 5 shows a second internal cross sectional view of the base;
Figure 6 shows the whole kitchen appliance with the jar fully screwed into the tool holder;
Figure 7 shows the whole kitchen appliance with the jar partially unscrewed from the tool holder but the tool holder still on the base; and
Figure 8 shows an example of the inductive proximity sensor arrangement.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention which is defined by the appended claims. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a kitchen appliance which has a base, a tool holder for mounting on the base and a jar. A magnetic drive coupling is between the base and the tool holder. A sensor is used to sense whether or not the jar is mounted over the tool holder, and rotation of the rotary tool is enabled in dependence on the sensing by the sensor. The sensor comprises a component which is displaced by the mounting of the jar to the tool holder and a proximity sensor arrangement in the base for detecting a proximity of the component. This kitchen appliance thus has remote sensing of when a jar is coupled to the tool holder. The rotary tool can be stopped as soon as it is detected that the jar is disconnected from the tool holder.

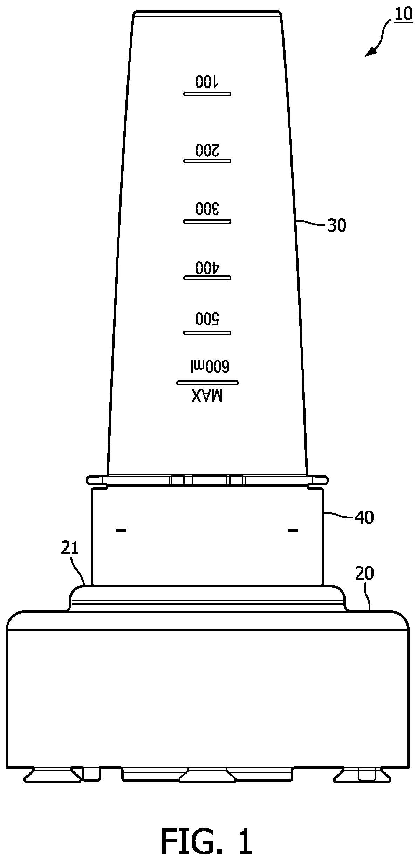

Figure 1 shows a kitchen appliance of the type to which the invention may be applied. The kitchen appliance 10 comprises a base 20 housing a motor, a jar 30 and a tool holder 40. The tool holder 40 fits over a top opening of the jar, for example by a screw fit. The tool holder houses a rotary tool, such as a blending blade.

The jar is filled with food items to be blended, and the tool holder is then fitted over the top. Thus, the tool holder functions as a lid of the jar. The jar is then inverted to mount it over the base, in the orientation shown in Figure 1.

In traditional designs, there is a mechanical interlocking to fit the tool holder 40 to the base 20, such as a bayonet coupling. This coupling provides mechanical connection of the jar set (the jar and the attached tool holder) to the base as well as providing a rotary coupling.

This invention instead relates to a design in which the rotary coupling is implemented using a magnetic drive coupling. The magnetic drive coupling for example has a first portion in the base 20 and a second portion in the tool holder 40. The magnetic attraction between the two parts provides both a rotary coupling and a mechanical alignment. Thus, there is no need for interlocking mechanical parts.

The base 20 instead has a basically flat upper surface 21 over which the tool holder sits. The first portion of the magnetic drive coupling is beneath the flat upper surface 21 and the second portion is within the tool holder 40.

A bottom side of the tool holder 40 mounts over the base 20 but as mentioned above this may use magnetic attraction only. Thus, the tool holder fits to the base with no mechanical interlocking. There may be a lip or contoured surface to assist with the correct placement and alignment of the tool holder over the base, but the surfaces are basically flat for easy cleaning.

Each drive coupling portion for example comprises a ring of magnets with alternating polarity. The north poles of the first portion of the magnetic drive coupling align with the south poles of the second portion of the magnetic drive coupling (and vice versa). In this way, torque can be transferred, but also the tool holder is releasably attached to the base by magnetic forces.

The invention relates to a sensor for sensing whether or not the jar 30 is mounted over the tool holder 40. The sensor has parts in the tool holder and parts in the base but there is no need for any mechanical or electrical physical connections between those parts.

The invention in particular makes use of proximity sensing and provides a component to be sensed which is moved by attachment of the jar to the tool holder.

The invention will first be described with reference to an example which makes use of inductive proximity sensing.

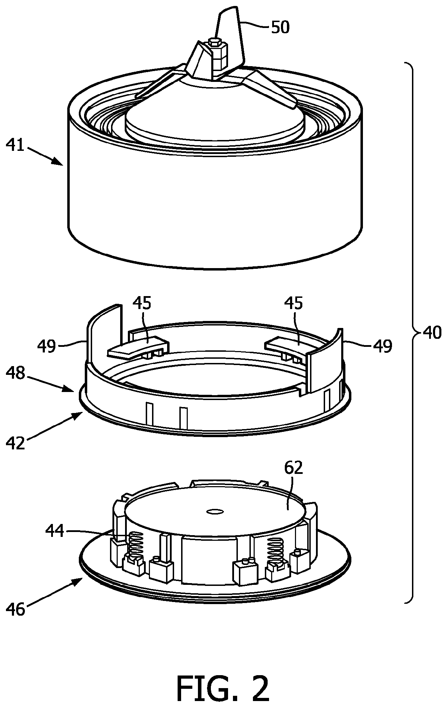

Figure 2 shows an example of this first example of the design of the tool holder 40 to provide the sensor function.

The tool holder 40 comprises a collar 41 within which the tool e.g. blade 50, is rotatably mounted.

The tool holder comprises a base part 46 which houses the second portion 62 of the magnetic drive coupling.

A slider 48 is slidably mounted over the base part 46, The slider 48 can slide up and down relative to the base part. The slider includes a component 42 at its bottom surface. In this inductive sensing example, the component is a metallic component. It may be fixed to the slider (which is e.g. plastic) or it may be an integral part of a metal slider. The slider 48 is designed to move down when the tool holder 40 is connected to the jar 30. When the jar 30 is removed from the tool holder 40, the slider 48 is biased upwardly by a spring arrangement comprising a set of springs 44.

The springs 44 push up on platforms 45 from below, thereby to push and bias the slider 48 to an upward position.

The slider 48 has upwardly projecting tabs 49 (two in this example but there may be any number). These project though the collar 41 so that they are contacted (indirectly through a seal) by the jar. As the jar moves down into the tool holder when screwed in, a lip of the jar pushes down the slider 48 by pushing on the tabs 49 through the seal. This also compresses the seal to complete a sealing function of the seal. This slider 48 moves the metallic component 42 downwardly against the bias of the springs 44. The result is that the metallic component moves closer to the base 20.

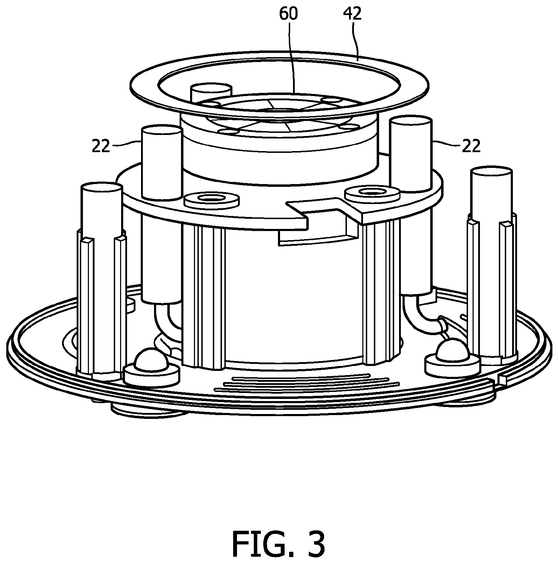

Figure 3 shows an embodiment of the design of the base 20 to provide the sensor function. It also shows the metallic component 42 (which is part of the tool holder), in the form of an annular ring.

The base 20 comprises an inductive proximity sensor arrangement for detecting a proximity of the metallic component 42. A set of inductive sensors 22 is shown. The sensors 22 of the inductive proximity sensor arrangement detect a proximity of the metallic component.

Figure 3 also shows the first portion 60 of the magnetic drive coupling. In this embodiment, the metallic component 42 is a ring around the magnetic drive coupling, but according to an example which does not form part of the invention it could instead be discrete portions for the respective sensor or sensors. The engagement between the two portions of the magnetic drive coupling provides alignment between the base and the tool holder, and hence a known alignment between the metallic component 42 and the sensors 22.

A controller of the appliance is then configured to enable or disable rotation of the rotary tool 50 in dependence on the sensing by the sensor arrangement.

The kitchen appliance thus has an inductive proximity sensor for sensing when a jar is coupled to the tool holder. The rotary tool can be stopped as soon as it is detected that the jar is disconnected from the tool holder. The design thereby prevents a dangerous situation of a rotating tool being exposed to a user, because the jar always needs to be present, providing a protective cover over the tool. There is no need for any mechanical or electrical connection between the tool holder and the base.

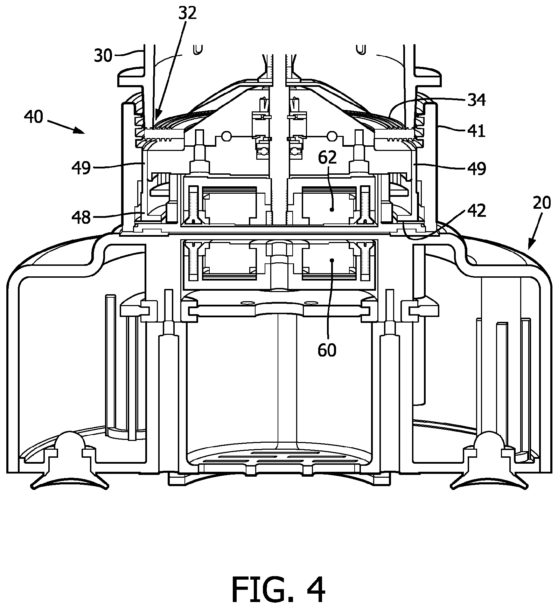

Figure 4 shows an internal cross sectional view of the base (with the motor removed). This cross section shows two opposite tabs 49 which project through the collar 41 so that they may be pushed by a lip 32 of the jar 30. The seal 34 is around the bottom of the tool holder. The lip 32 is above the seal 34 and the tabs 49 are below the seal. Thus, the jar pushes on the tabs of the slider 48 through the seal 34. Thus, the jar contents remain sealed.

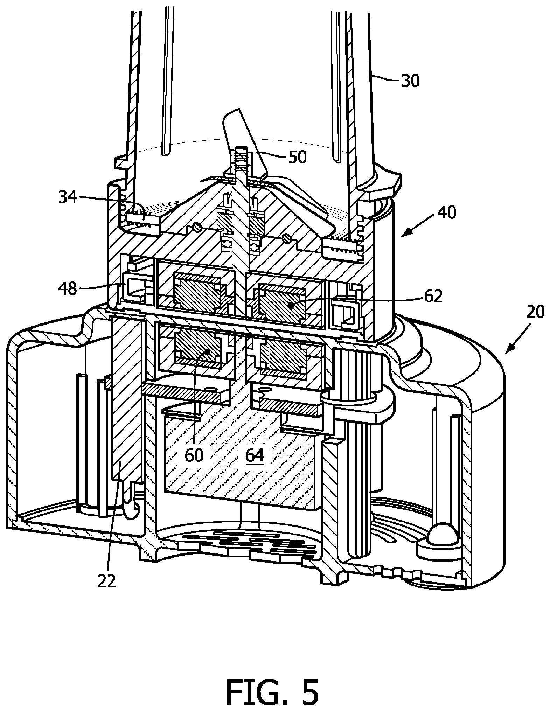

Figure 5 shows a cross section which is instead through one of the proximity sensors 22 and also shows the motor 64.

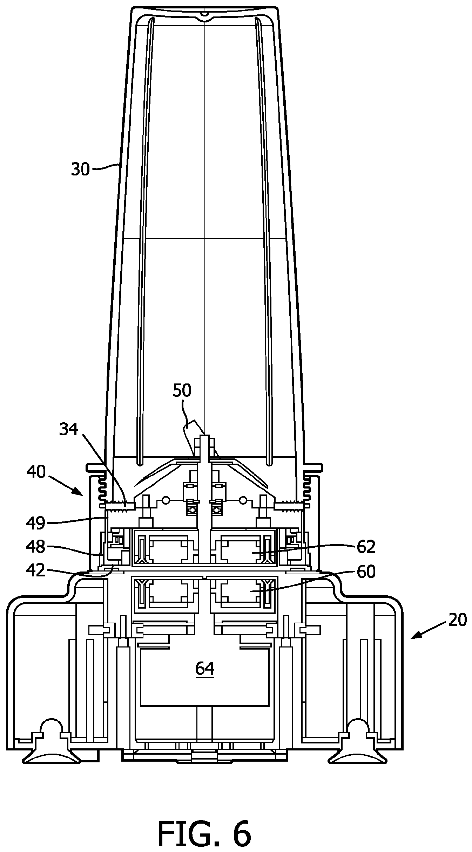

Figure 6 shows the whole kitchen appliance with the jar 30 fully screwed into the tool holder 40. The slider 48 is pushed fully down so that the metallic component 42 (at the base of the slider) is at the closest position to the base 20. Thus, when assembling the tool holder to the jar (e.g. by screwing), the metal ring is pushed down to close the bottom of the tool holder. Therefore, when the jar set is seated on the base 20, the inductive proximity sensor can detect the metallic component and the drive of the motor is enabled.

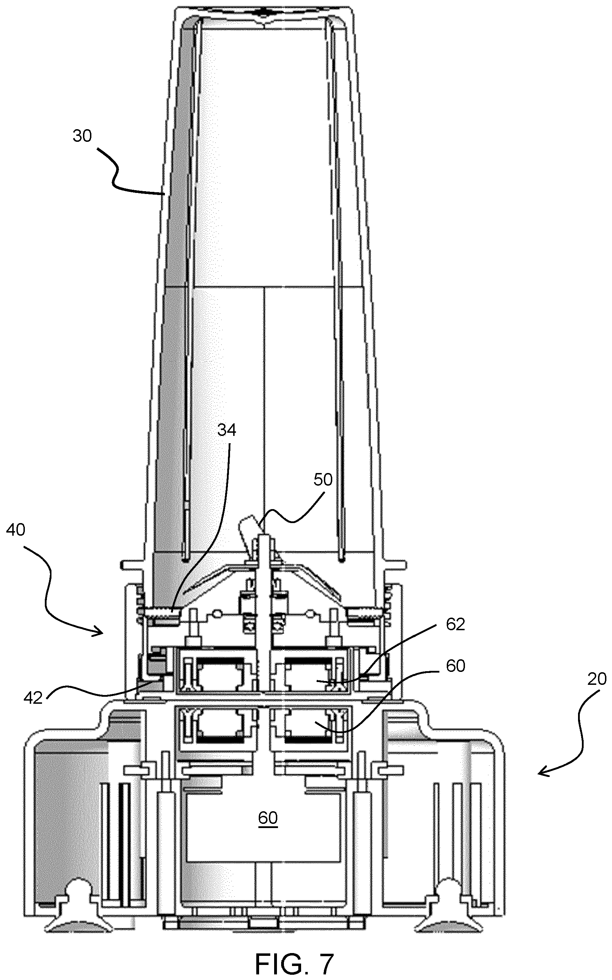

Figure 7 shows the whole kitchen appliance with the jar 30 partially unscrewed from the tool holder 40 but the tool holder still sitting on the base.

The slider 48 is now biased upwardly by the spring arrangement. It pushes up the seal 34 against the lip of the jar. There is now a space beneath the metallic component 42 and the proximity sensor detects the change in inductance so the drive of the motor is disabled.

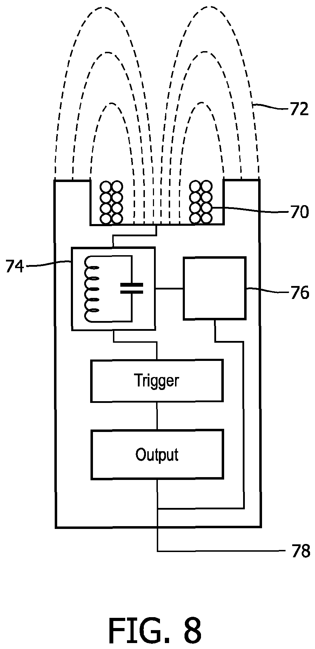

Figure 8 shows an example of the inductive proximity sensor arrangement. It comprises a drive coil 70 for generating an electromagnetic field, an oscillator circuit 74 (which includes the drive coil in that the drive coil influences the resonant frequency of oscillation) and a frequency sensing circuit 76.

The frequency measuring circuit detects a change in a resonance frequency of the oscillator circuit.

The drive coil generates a fixed frequency magnetic field all the time. When the metallic component is close to the sensor, within a detectable distance range, the metallic component generates an opposite magnetic field to the sensor magnetic field by eddy currents (to resist the change in magnetic field), resulting in a frequency change of the inductive proximity sensor. Thus, the inductive proximity can detect the metallic component based on the frequency of oscillation.

The example described above is based on inductive sensing. The same advantages may be obtained based on optical proximity sensing. In such a case, the component 42 functions as a reflector. It does not need to be metallic in this case, and simply needs a reflecting bottom surface. It may simply be a reflecting bottom surface of the slider 48.

The sensor 22 may then be replaced by a light source, such as an infrared light source and a detector such a phototransistor for detecting the light reflected by the component 42. The distance between the sensor (light source and detector) and the reflector 42 determines the length of the optical path between the light source and the detector, and hence the amount of attenuation. Thus, the detected reflected light signal can be used to determine the distance between the sensor and the reflector and hence determine whether or not the jar is attached to the tool holder.

An optical window is then needed between the base (where the light source and detector are located) and the tool holder (where the reflector is located). The window needs to be transmissive to the light used by the optical sensor.

The same mechanical design may be used for movement of the reflector as for the metallic component of the inductive sensor design.

There may be a single proximity sensor or a set, such as two, three or more. The use of multiple sensors is more robust to noise and to false triggering. For example, even if one of the sensors loses function due to a noise influence, another sensor can still correctly function.

There is for example a set of two springs to push up the metal component when the j ar is taken off the blade holder.

Variations to the disclosed embodiments can be understood and effected by those skilled in the art in practicing the claimed invention, from a study of the drawings, the disclosure and the appended claims as long as the resulting embodiment is encompassed by the scope of the appended claims. In the claims, the word "comprising" does not exclude other elements or steps, and the indefinite article "a" or "an" does not exclude a plurality.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (10) comprising:
a base (20) housing a motor (64), the base having a flat upper surface (21) and a first portion (60) of a magnetic drive coupling beneath the flat upper surface;
a tool holder (40), wherein a bottom side of the tool holder (40) allows placing the tool holder (40) on the base (20), wherein the tool holder comprises:
a rotary tool (50);
a second portion (62) of the magnetic drive coupling for magnetically coupling with the first portion (60) of the magnetic drive coupling such that the rotary tool (50) is driven by the motor (64) of the base via the magnetic drive coupling;
a jar (30) for mounting over the tool holder (20);
a sensor (22,42) for sensing whether or not the jar (30) is mounted over the tool holder (40); and
a controller for enabling or disabling rotation of the rotary tool (50) in dependence on the sensing by the sensor,
wherein the sensor comprises an annular ring component (42) which is displaced by the mounting of the jar (30) to the tool holder (40) and a proximity sensor arrangement (22) in the base for detecting a proximity of the component.

2. The kitchen appliance of claim 1, wherein the jar (30) is a screw fit to the tool holder (40).

3. The kitchen appliance of claim 1 or 2, wherein the tool holder (40) fits to the base (20) with no mechanical interlocking.

4. The kitchen appliance of any one of claims 1 to 3, wherein the annular ring component (42) is mounted in the tool holder (40) and is moved by a bottom lip (32) of the jar (30) when the jar is attached to the tool holder.

5. The kitchen appliance of claim 4, wherein tool holder (40) has a slider (48) which is moved by a bottom lip (32) of the jar when the jar is attached to the tool holder.

6. The kitchen appliance of any one of claims 1 to 5, wherein the proximity sensor arrangement comprises a set of proximity sensors (22).

7. The kitchen appliance of any one of claims 1 to 7, wherein the annular ring component (42) is biased away from the proximity sensor by a spring arrangement (44), wherein mounting of the jar is against the bias of the spring arrangement (44).

8. The kitchen appliance of claim 7, wherein the spring arrangement comprises a set of springs (44).

9. The kitchen appliance of any one of claims 1 to 8, wherein the annular ring component comprises a metallic component and the proximity sensor arrangement comprises an inductive proximity sensor.

10. The kitchen appliance of claim 9, wherein the inductive proximity sensor comprises a drive coil (70) for generating an electromagnetic field, an oscillator circuit (74) which includes the drive coil, and a frequency sensing circuit for detecting a change in a resonance frequency of the oscillator circuit.

11. The kitchen appliance of any one of claims 1 to 10, wherein the annular ring component comprises a reflector and the proximity sensor arrangement comprises a light source for directing light to the reflector and a light detector for detecting reflected light.

12. The kitchen appliance of claim 11, wherein the light source comprises an infrared light source.

13. The kitchen appliance of any one of claims 1 to 12, comprising a blender, wherein the rotary tool comprises a blade.

## Patentansprüche

1. Küchengerät (10), umfassend:
eine Basis (20), die einen Motor (64) beherbergt, wobei die Basis eine flache obere Oberfläche (21) und einen ersten Abschnitt (60) einer Magnetantriebskopplung unter der flachen oberen Oberfläche aufweist;
einen Werkzeughalter (40), wobei eine Unterseite des Werkzeughalters (40) Platzieren des Werkzeughalters (40) auf der Basis (20) ermöglicht, wobei der Werkzeughalter Folgendes umfasst:
ein Drehwerkzeug (50);
einen zweiten Abschnitt (62) der Magnetantriebskopplung zum magnetischen Koppeln mit dem ersten Abschnitt (60) der Magnetantriebskopplung, so dass das Drehwerkzeug (50) von dem Motor (64) der Basis über die Magnetantriebskopplung angetrieben wird;
ein Gefäß (30) zur Montage über dem Werkzeughalter (20);
einen Sensor (22, 42) zum Erfassen, ob das Gefäß (30) über dem Werkzeughalter (40) montiert ist oder nicht; und
eine Steuereinheit zum Aktivieren oder Deaktivieren einer Drehung des Drehwerkzeugs (50) in Abhängigkeit von dem Erfassen durch den Sensor,
wobei der Sensor eine ringförmige Ringkomponente (42), die durch die Montage des Gefäßes (30) an dem Werkzeughalter (40) verschoben wird, und eine Näherungssensoranordnung (22) in der Basis zum Erfassen einer Nähe der Komponente umfasst.

2. Küchengerät nach Anspruch 1, wobei das Gefäß (30) mit dem Werkzeughalter (40) verschraubbar ist.

3. Küchengerät nach Anspruch 1 oder 2, wobei der Werkzeughalter (40) ohne mechanische Verriegelung an der Basis (20) angebracht ist.

4. Küchengerät nach einem der Ansprüche 1 bis 3, wobei die ringförmige Ringkomponente (42) im Werkzeughalter (40) montiert ist und durch eine untere Lippe (32) des Gefäßes (30) bewegt wird, wenn das Gefäß am Werkzeughalter befestigt ist.

5. Küchengerät nach Anspruch 4, wobei der Werkzeughalter (40) einen Schieber (48) aufweist, der durch eine untere Lippe (32) des Gefäßes bewegt wird, wenn das Gefäß am Werkzeughalter befestigt wird.

6. Küchengerät nach einem der Ansprüche 1 bis 5, wobei die Näherungssensoranordnung einen Satz von Näherungssensoren (22) umfasst.

7. Küchengerät nach einem der Ansprüche 1 bis 7, wobei die ringförmige Ringkomponente (42) durch eine Federanordnung (44) vom Näherungssensor weg vorgespannt ist, wobei Montage des Gefäßes gegen die Vorspannung der Federanordnung (44) erfolgt.

8. Küchengerät nach Anspruch 7, wobei die Federanordnung einen Satz Federn (44) umfasst.

9. Küchengerät nach einem der Ansprüche 1 bis 8, wobei die ringförmige Ringkomponente eine metallische Komponente umfasst und die Näherungssensoranordnung einen induktiven Näherungssensor umfasst.

10. Küchengerät nach Anspruch 9, wobei der induktive Näherungssensor eine Antriebsspule (70) zum Erzeugen eines elektromagnetischen Felds, einen Oszillatorkreis (74), der die Antriebsspule beinhaltet, und einen Frequenzerfassungskreis zum Detektieren einer Änderung einer Resonanzfrequenz des Oszillatorkreises umfasst.

11. Küchengerät nach einem der Ansprüche 1 bis 10, wobei die ringförmige Ringkomponente einen Reflektor umfasst und die Näherungssensoranordnung eine Lichtquelle zum Richten von Licht auf den Reflektor und einen Lichtdetektor zum Detektieren von reflektiertem Licht umfasst.

12. Küchengerät nach Anspruch 11, wobei die Lichtquelle eine Infrarotlichtquelle umfasst.

13. Küchengerät nach einem der Ansprüche 1 bis 12, umfassend einen Mixer, wobei das Drehwerkzeug eine Klinge umfasst.

## Revendications

1. Appareil de cuisine (10) comprenant :
une base (20) logeant un moteur (64), la base présentant une surface supérieure plate (21) et une première partie (60) d'un couplage à entraînement magnétique sous la surface supérieure plate ;
un porte-accessoires (40), dans lequel un côté inférieur du porte-accessoires (40) permet de placer le porte-accessoires (40) sur la base (20), dans lequel le porte-accessoires comprend :
un accessoire rotatif (50) ;
une seconde partie (62) du couplage à entraînement magnétique permettant un couplage magnétique avec la première partie (60) du couplage à entraînement magnétique de sorte que l'accessoire rotatif (50) soit entraîné par le moteur (64) de la base par l'intermédiaire du couplage à entraînement magnétique ;
un récipient (30) destiné à être monté sur le porte-accessoires (20) ;
un capteur (22, 42) servant à détecter si le récipient (30) est monté ou non sur le porte-accessoires (40) ; et
un dispositif de commande permettant d'activer ou de désactiver la rotation de l'accessoire rotatif (50) en fonction de la détection par le capteur,
dans lequel le capteur comprend un composant de bague annulaire (42) qui est déplacé par le montage du récipient (30) sur le porte-accessoires (40) et un agencement de capteur de proximité (22) dans la base pour détecter une proximité du composant.

2. Appareil de cuisine selon la revendication 1, dans lequel le récipient (30) est ajusté par vissage sur le porte-accessoires (40).

3. Appareil de cuisine selon la revendication 1 ou 2, dans lequel le porte-accessoires (40) s'ajuste sur la base (20) sans verrouillage mécanique rotatif.

4. Appareil de cuisine selon l'une quelconque des revendications 1 à 3, dans lequel le composant de bague annulaire (42) est monté dans le porte-accessoires (40) et est déplacé par une lèvre inférieure (32) du récipient (30) lorsque le récipient est fixé au porte-accessoires.

5. Appareil de cuisine selon la revendication 4, dans lequel le porte-accessoires (40) présente un coulisseau (48) qui est déplacé par une lèvre inférieure (32) du récipient lorsque le récipient est fixé au porte-accessoires.

6. Appareil de cuisine selon l'une quelconque des revendications 1 à 5, dans lequel l'agencement de capteur de proximité comprend un ensemble de capteurs de proximité (22).

7. Appareil de cuisine selon l'une quelconque des revendications 1 à 7, dans lequel le composant de bague annulaire (42) est sollicité à l'écart du capteur de proximité par un agencement de ressort (44), dans lequel le montage du récipient s'effectue contre la sollicitation de l'agencement de ressort (44).

8. Appareil de cuisine selon la revendication 7, dans lequel l'agencement de ressort comprend un ensemble de ressorts (44).

9. Appareil de cuisine selon l'une quelconque des revendications 1 à 8, dans lequel le composant de bague annulaire comprend un composant métallique et l'agencement de capteur de proximité comprend un capteur de proximité inductif.

10. Appareil de cuisine selon la revendication 9, dans lequel le capteur de proximité inductif comprend une bobine d'entraînement (70) pour générer un champ électromagnétique, un circuit oscillateur (74) qui comprend la bobine d'entraînement et un circuit de détection de fréquence pour détecter un changement de fréquence de résonance du circuit oscillateur.

11. Appareil de cuisine selon l'une quelconque des revendications 1 à 10, dans lequel le composant de bague annulaire comprend un réflecteur et l'agencement de capteur de proximité comprend une source de lumière pour diriger la lumière vers le réflecteur et un détecteur de lumière pour détecter la lumière réfléchie.

12. Appareil de cuisine selon la revendication 11, dans lequel la source de lumière comprend une source de lumière infrarouge.

13. Appareil de cuisine selon l'une quelconque des revendications 1 à 12, comprenant un mélangeur, dans lequel l'accessoire rotatif comprend une lame.
